# EUROPEAN PATENT APPLICATION

(11) **EP 4 609 980 A1**
(43) Date of publication of application: **03.09.2025**
(21) Application number: 24892462.3
(22) Date of filing: 25.10.2024
(51) Int. Cl.: B23K 11/31

(54) **WELDING ROD FIXING DEVICE AND WELDING ROD FIXING METHOD USING SAME**

(30) Priority: 30.11.2023 KR 20230170627
(71) Applicant: LG Energy Solution Ltd., 07335 Seoul (KR)
(72) Inventor: PARK, Ju Ho, Daejeon 34122 (KR); LEE, Jae Ik, Daejeon 34122 (KR); PARK, Seong Geun, Daejeon 34122 (KR); CHUNG, Jin Hae, Daejeon 34122 (KR); LEE, Jin Hyuk, Daejeon 34122 (KR); LEE, Jin Hyeong, Daejeon 34122 (KR)
(74) Representative: Goddar, Heinz J.
(86) International application number: PCT/KR2024/016388
(87) International publication number: WO 2025/116298

(57) **Abstract**

Disclosed are a welding rod fixing apparatus including a body portion including a first surface provided in the center thereof with a first hole through which a welding rod is configured to extend, a second surface provided in the center thereof with a second hole through which the welding rod is configured to extend, the second hole located at the position corresponding to the first hole, a third surface which connects the first surface and the second surface, a space portion formed as a result of a part of an outer circumferential surface formed by the third surface being opened, the space portion being formed such that a hollow is formed from a part of the outer circumferential surface to a central part where the first hole and the second hole are connected to each other, and a fourth surface configured to form the space portion, and a coupling portion configured to be insertable into the space portion so as to press the welding rod when the welding rod extends through the first hole and the second hole, and a welding rod fixing method using the same.

## Description

### [Technical Field]

This application claims the benefit of priority to Korean Patent Application No. 2023-0170627 filed on November 30, 2023, the disclosure of which is incorporated herein by reference in its entirety.

The present invention relates to a welding rod fixing apparatus and a welding rod fixing method using the same, and more particularly to a welding rod fixing apparatus for vertically fixing a welding rod and a welding rod fixing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Meanwhile, in the case of a cylindrical secondary battery, a negative electrode tab is resistance welded to a can, whereby the can serves as a negative electrode terminal. When the negative electrode tab is resistance welded to the can, as described above, a spatter phenomenon may occur in which molten metal particles are scattered around a welded area, which may cause low voltage, if the welding angle is not correct.

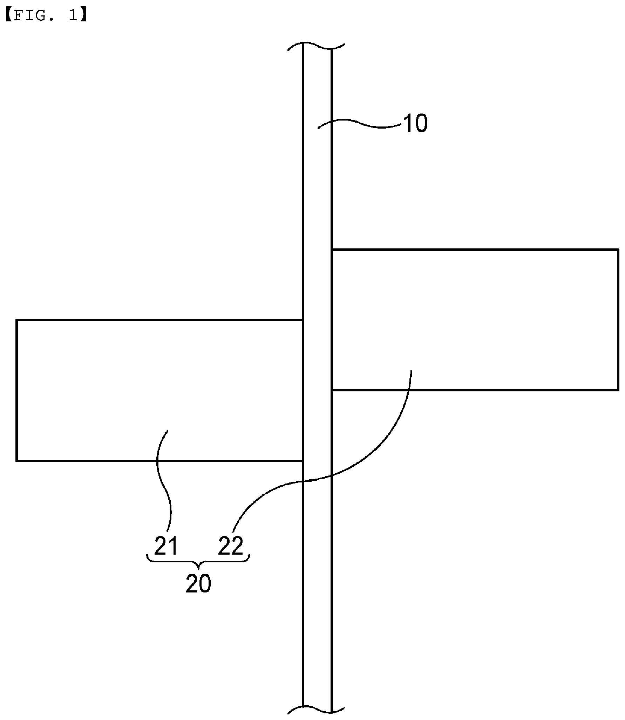

FIG. 1 is a view illustrating the state in which a welding rod is fixed to a conventional welding rod fixing apparatus.

Referring to FIG. 1, the conventional welding rod fixing apparatus 20 fixes a welding rod 10 by interposing the welding rod 10 between two blocks 21 and 22 and coupling the two blocks 21 and 22 to each other.

However, there is a problem that a step is easily formed between upper and lower surfaces of the two blocks 21 and 22, and accordingly, welding surfaces of the welding rod 10 and a workpiece are not perpendicular, resulting in a decrease in the contact area, and a spatter phenomenon occurs due to over-melting due to an increase in heat generation.

### (Prior Art Document)

(Patent Document 1) Korean Patent Application Publication No. 10-2023-0053831

### [Disclosure]

### [Technical Problem]

The present invention has been made in view of the above problems, and it is an object of the present invention to a welding rod fixing apparatus for fixing a welding rod such that welding surfaces of the welding rod and a workpiece are perpendicular without the occurrence of a step between upper and lower surfaces and a welding rod fixing method using the same.

### [Technical Solution]

As a technical means for achieving the above object, a welding rod fixing apparatus according to an embodiment of the present invention includes a body portion (100) including a first surface (110) provided in the center thereof with a first hole (111) through which a welding rod (10) is configured to extend, a second surface (120) provided in the center thereof with a second hole (121) through which the welding rod (10) is configured to extend, the second hole located at a position corresponding to the first hole (111), a third surface (130) which connects the first surface (110) and the second surface (120), a space portion (150) formed as a result of a part of an outer circumferential surface formed by the third surface (130) being opened, the space portion being formed such that a hollow is formed from a part of the outer circumferential surface to a central part where the first hole (111) and the second hole (121) are connected to each other, and a fourth surface (140) configured to form the space portion (150), and a coupling portion (200) configured to be insertable into the space portion (150)so as to press the welding rod (10) when the welding rod extends through the first hole (111) and the second hole (121).

Also, in the welding rod fixing apparatus according to the embodiment of the present invention, the coupling portion (200), when inserted into the space portion, may contact the fourth surface (140) and may be configured to press the welding rod (10) together with the fourth surface (140).

Also, in the welding rod fixing apparatus according to the embodiment of the present invention, the body portion (100) may be provided in the fourth surface (140) thereof in contact with the coupling portion (200) with a first recess (141) corresponding to the shape of a part of the welding rod (10), and the coupling portion (200) may include one surface thereof in contact with the fourth surface (140) with a second recess (210) corresponding to the shape of a part of the welding rod (10).

Also, the welding rod fixing apparatus according to the embodiment of the present invention may further include a fastening member (300) coupled to the body portion (100) after the coupling portion (200) is inserted into the space portion (150).

Also, in the welding rod fixing apparatus according to the embodiment of the present invention, the fourth surface (140) may further include a fastening recess (142) into which the fastening member (300) is configured to be inserted, and the coupling portion (200) may further include a fastening hole (220), into which the fastening member (300) is configured to be inserted, the fastening hole located at the position corresponding to the fastening recess (142).

Also, in the welding rod fixing apparatus according to the embodiment of the present invention, the fastening member (300) may include, on an outer surface thereof, a male thread, the fastening member being configured to simultaneously extend through the fastening recess (142) and the fastening hole (220), and each of the fastening recess (142) and the fastening hole (220) may include a female thread such that the fastening member (300), the fastening recess (142), and the fastening hole (220) are configured to be threadedly coupled to each other.

Also, in the welding rod fixing apparatus according to the embodiment of the present invention, the fastening recess (142) may be formed toward the space portion (150), and the fastening recess being may include a plurality of fastening recesses spaced apart from each other such that the first recess (141) is disposed therebetween so as to avoid interference with the first recess (141), and the fastening hole (220) may be formed through the one surface and the other surface of the coupling portion (200), and the fastening hole may include a plurality of fastening holes spaced apart from each other such that the second recess (210) is disposed therebetween so as to avoid interference with the second recess (210).

Also, in the welding rod fixing apparatus according to the embodiment of the present invention, a central part of the fourth surface (140) may be concave towards the third surface (130), and the one surface of the coupling portion (200) may be configured as a curved surface corresponding to the shape of the central part of the fourth surface (140) so as to be engaged with the central part of the fourth surface (140).

Also, in the welding rod fixing apparatus according to the embodiment of the present invention, the other surface of the coupling portion (200) may be located inwardly of the space portion (150), and the other surface may be flat.

Also, in the welding rod fixing apparatus according to the embodiment of the present invention, the central part of the fourth surface (140) may be flat, and the one surface of the coupling portion (200) may be configured as a flat surface corresponding to the shape of the central part of the fourth surface (140) so as to be engaged with the central part of the fourth surface (140).

Also, in the welding rod fixing apparatus according to the embodiment of the present invention, the other surface of the coupling portion (200) may be outwardly convex.

In addition, a welding rod fixing method using the welding rod fixing apparatus according to the embodiment of the present invention includes (S1) inserting a welding rod (10) so as to simultaneously extend through the first hole (111) and the second hole (121), (S2) inserting the coupling portion (200) into the space portion (150), and (S3) inserting the fastening member (300) into the fastening recess (142) and the fastening hole (220) to fix the fastening member.

Also, in the welding rod fixing method according to the embodiment of the present invention, in step (S2),

the coupling portion (200) may press a part of the welding rod (10) disposed in the first recess (141) through the second recess (210).

### [Advantageous Effects]

As is apparent from the above description, in a welding rod fixing apparatus according to the present invention and a welding rod fixing method using the same, a body portion formed as one piece is provided in a first surface and a second surface thereof with a first hole and a second hole, through which a welding rod extends, respectively, and a coupling portion is inserted into and fixed to the body portion, whereby it is possible to maintain the welding rod in a vertical state.

Also, in the welding rod fixing apparatus according to the present invention and the welding rod fixing method using the same, the body portion is provided with a first recess in which a part of the welding rod is received, and the coupling portion is also provided with a second recess in which a part of the welding rod is received, whereby the welding rod is always maintained in the vertical state without being twisted, and therefore it is possible to minimize welding defects.

### [Description of Drawings]

FIG. 1 is a view illustrating the state in which a welding rod is fixed to a conventional welding rod fixing apparatus.
FIG. 2 is a perspective view illustrating the state in which a welding rod is fixed to a welding rod fixing apparatus according to a first embodiment of the present invention.
FIG. 3 is a sectional view of the welding rod fixing apparatus shown in FIG. 2, taken along an XZ plane.
FIG. 4 is a sectional view of the welding rod fixing apparatus shown in FIG. 2, taken along an XY plane.
FIG. 5 is a perspective view illustrating a body portion of the welding rod fixing apparatus according to the first embodiment of the present invention.
FIG. 6 is a perspective view illustrating a coupling portion of the welding rod fixing apparatus according to the first embodiment of the present invention.
FIG. 7 is a perspective view illustrating the state in which a welding rod is fixed to a welding rod fixing apparatus according to a second embodiment of the present invention.
FIG. 8 is a sectional view of the welding rod fixing apparatus shown in FIG. 7, taken along an XZ plane.
FIG. 9 is a sectional view of the welding rod fixing apparatus shown in FIG. 7, taken along an XY plane.
FIG. 10 is a perspective view illustrating a body portion of the welding rod fixing apparatus according to the second embodiment of the present invention.
FIG. 11 is a perspective view illustrating a coupling portion of the welding rod fixing apparatus according to the second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a welding rod fixing apparatus according to the present invention will be described.

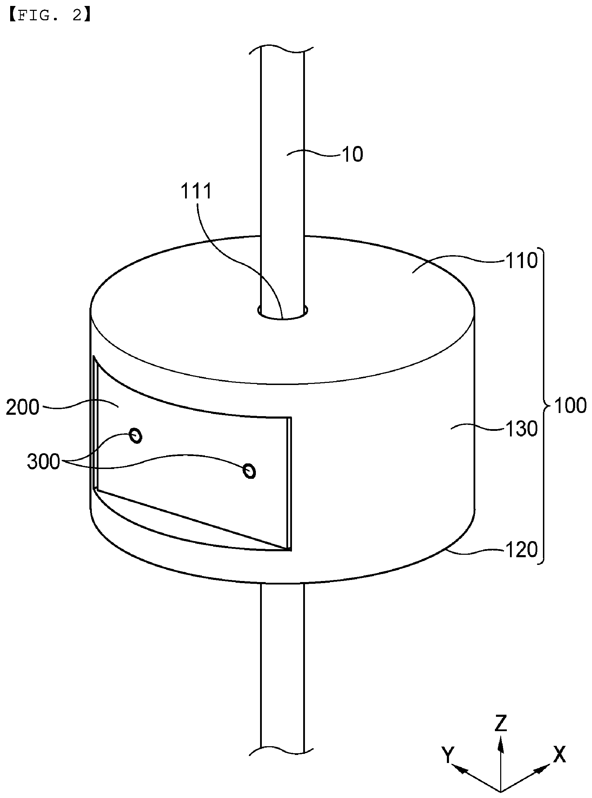

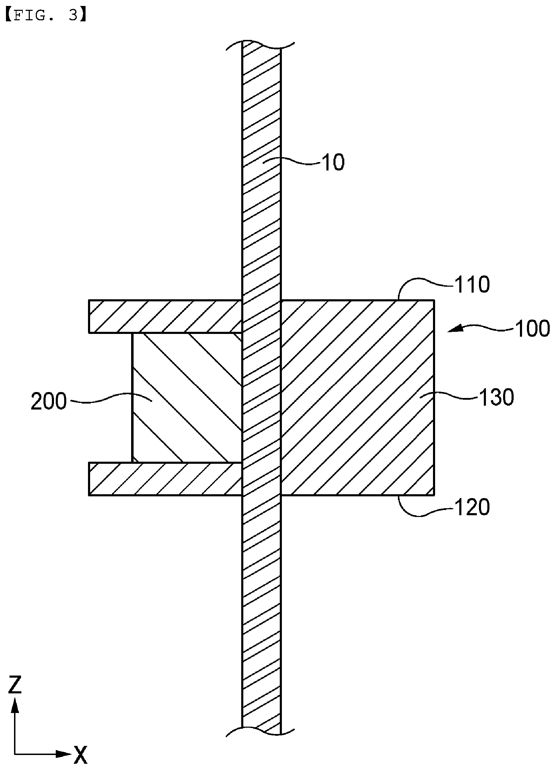

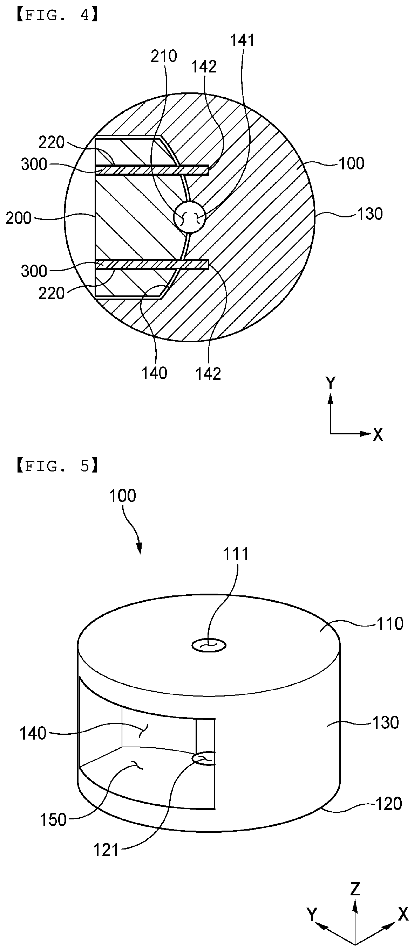

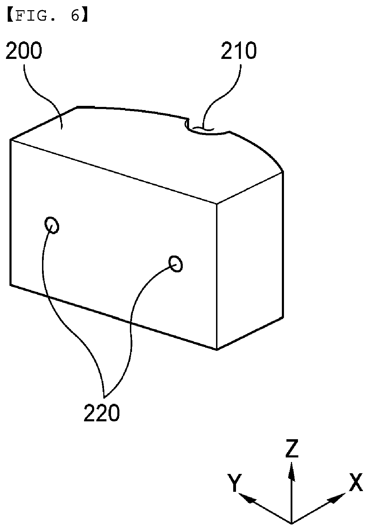

FIG. 2 is a perspective view illustrating the state in which a welding rod is fixed to a welding rod fixing apparatus according to a first embodiment of the present invention, FIG. 3 is a sectional view of the welding rod fixing apparatus shown in FIG. 2, taken along an XZ plane, and FIG. 4 is a sectional view of the welding rod fixing apparatus shown in FIG. 2, taken along an XY plane. FIG. 5 is a perspective view illustrating a body portion of the welding rod fixing apparatus according to the first embodiment of the present invention, and FIG. 6 is a perspective view illustrating a coupling portion of the welding rod fixing apparatus according to the first embodiment of the present invention.

Referring to FIGs. 2 to 6, the welding rod fixing apparatus according to the first embodiment of the present invention includes a body portion 100, a coupling portion 200, and a fastening member 300.

The body portion 100 includes a first surface 110, a second surface 120, a third surface 130, a fourth surface 140, and a space portion 150. For example, the body portion 100 may be in the form of a cylindrical block, with a part of an outer circumferential surface thereof being open to provide the space portion 150.

However, the body portion 100 is not limited thereto, and may be in the form of a hexahedron, with a part of an outer circumferential surface thereof being open to provide the space portion 150. For example, the body portion 100 may be configured as a member having a first surface 110, a second surface 120, and an outer circumferential surface configured to have a space portion 150.

More specifically, the first surface 110 may be an upper surface of the body portion 100 (12 o'clock position in FIG. 2), the second surface 120 may be a lower surface of the body portion 100 (6 o'clock position in FIG. 2), and the third surface 130 may be an outer circumferential surface of the body portion 100. In addition, the fourth surface 140 may be a surface formed as a result of a part of the outer circumferential surface formed by the third surface 130 being opened.

The first surface 110 of the body portion 100 may be provided in the center thereof with a first hole 111 through which a welding rod 10 extends. In addition, the second surface 120 of the body portion may be provided in the center thereof with a second hole 121 through which the welding rod 10 extends, the second hole being formed at the position corresponding to the first hole 111.

Here, that the second hole 121 is formed at the position corresponding to the first hole 111 means that the second hole 121 is formed on the same Z-axis line as the first hole 111 in FIG. 2.

In addition, for example, it may be preferable for the size of each of the first hole 111 and the second hole 121 to correspond to the sectional size of the welding rod 10 such that the welding rod 10 can extend therethrough or for the size of each of the first hole 111 and the second hole 121 to be set to be greater than the sectional size of the welding rod 10 in consideration of a construction error, a manufacturing error, or the like. That is, each of the first hole 111 and the second hole 121 may be formed such that the welding rod 10 can be inserted therethrough without interference.

The third surface 130 may be an outer circumferential surface connecting the first surface 110 and the second surface 120 to each other, and the space portion 150 may be formed as a result of a part of the outer circumferential surface formed by the third surface 130 being opened and such that a hollow is formed from a part of the outer circumferential surface to a central part where the first hole 111 and the second hole 121 are connected to each other.

The fourth surface 140 is a surface forming the space portion 150, and may be formed to be connected from the open part of the outer circumferential surface formed by the third surface 130 to the central part where the first hole 111 and the second hole 121 are connected to each other. Accordingly, the space portion 150 may be formed by the first surface 110, the second surface 120, and the fourth surface 140.

The fourth surface 140 of the body portion 100 may be provided with a first recess 141 corresponding to the shape of a part of the welding rod 10. For example, the first recess 141 may be formed such that a part of the welding rod 10 that has extended through the first hole 111 and the second hole 121, i.e., a part of the welding rod 10 located between the first hole 111 and the second hole 121, is received (seated) therein.

In addition, the fourth surface 140 may be configured such that the surface in which the first recess 141 where the first hole 111 and the second hole 121 are connected to each other is formed is concave toward the third surface 130. More specifically, referring to FIG. 4, the fourth surface 140 may be configured such that a central part of the fourth surface 140 in which the first recess 141 is formed is concave toward the third surface 130 while having an approximately "U" shape.

Referring back to FIGs. 2 to 6, the coupling portion 200 may be inserted into the space portion 150 of the body portion 100, and may be configured to press the welding rod 10 extending through the first hole 111 and the second hole 121.

The coupling portion 200 may have a shape corresponding to the shape of the space portion 150 so as to be inserted into the space portion 150. In other words, the coupling portion 200 may be configured to have the same shape as the space portion 150 formed by the fourth surface 140.

It is preferable for the size of the coupling portion 200 to correspond to the sectional size of the space portion 150 such that the coupling portion can be inserted into the space portion 150 or to be less than the sectional size of the space portion 150 in consideration of a construction error, a manufacturing error, or the like. That is, the size of the coupling portion 200 may be set such that the coupling portion can be inserted into the space portion 150 without interfering with the body portion 100 when inserted into the space portion.

The coupling portion 200 may be in contact with the fourth surface 140 after insertion into the space portion 150, and may be configured to press the welding rod 10 together with the fourth surface 140. For example, three perimeter surfaces of the coupling portion 200 may be in contact with the fourth surface 140 after the coupling portion is inserted into the space portion 150.

In addition, the coupling portion 200 may be provided in one surface thereof in contact with the fourth surface 140 with a second recess 210 corresponding to the shape of a part of the welding rod 10. For example, the second recess 210 may be formed such that a part of the welding rod 10 that has extended through the first hole 111 and the second hole 121, i.e., a part of the welding rod 10 located between the first hole 111 and the second hole 121, is received (seated) therein. The second recess 210 may press the welding rod 10 together with the first recess 110.

One surface (2 o'clock position in FIG. 6) of the coupling portion 200 in contact with the central part of the fourth surface 140 may be curved so as to correspond to the shape of the central portion of the fourth surface 140 such that the surface of the coupling portion is engaged with the central portion of the fourth surface 140. In other words, one surface of the coupling portion 200 may be convex.

In addition, the other surface of the coupling portion 200 (8 o'clock position in FIG. 6) may be located inwardly of the space portion 150 and may be flat. In other words, referring to FIGs. 2 and 6, the other surface of the coupling portion 200 may be configured as a flat surface located inwardly of the space portion 150 such that a part of each of the first surface 110 and the second surface 120 is in a protruding state after the coupling portion 200 is inserted into the space portion 150.

Meanwhile, the fastening member 300 may be coupled to the body portion 100 after the coupling portion 200 is inserted into the space portion 150. In other words, the body portion 100 and the coupling portion 200 may be coupled to each other via the fastening member 300.

More specifically, the fourth surface 140 of the body portion 100 may be provided with a fastening recess 142 into which the fastening member 300 is inserted. In addition, the fastening recess 142 may be formed toward the space portion 150, and may be provided in plural so as be spaced apart from each other in the state in which the first recess 141 is disposed therebetween in order to avoid interference with the first recess 141. For example, two fastening recesses 142 may be formed in the state in which the first recess 141 is disposed therebetween, and in another example, four fastening recesses may be formed in the state in which the first recess 141 is disposed therebetween.

In addition, the coupling portion 200 may have a fastening hole 220, into which the fastening member 300 is inserted, formed at the position corresponding to the fastening recess 142. In addition, the fastening hole 220 may be formed through one surface and the other surface of the coupling portion 200, and may be provided in plural so as be spaced apart from each other in the state in which the second recess 210 is disposed therebetween in order to avoid interference with the second recess 210. For example, two fastening holes 220 may be formed in the state in which the second recess 210 is disposed therebetween, and in another example, four fastening holes may be formed in the state in which the second recess 210 is disposed therebetween.

The fastening recesses 142 and the fastening holes 220 are formed to be located on the same line (i.e., the X-axis line in FIG. 2), and are preferably formed in equal numbers.

In addition, each of the fastening recess 142 and the fastening hole 220 may be provided with a female thread and an outer surface of the fastening member 300 may be provided with a male thread formed so as to be engaged with the female thread. For example, the fastening member 300 may be provided as a screw member having a male thread formed on an outer surface thereof.

The fastening member 300 may simultaneously extend through the fastening hole 220 and the fastening recess 142, and the fastening member 300 may be threadedly coupled to the fastening hole 20 and the fastening recess 142.

Accordingly, the fastening member 300 may fix the coupling portion 200 and the body portion 100 so as to be coupled to each other.

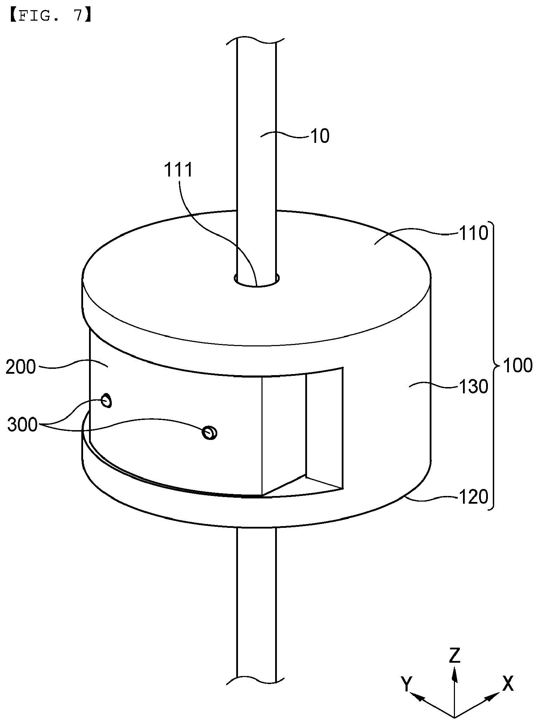

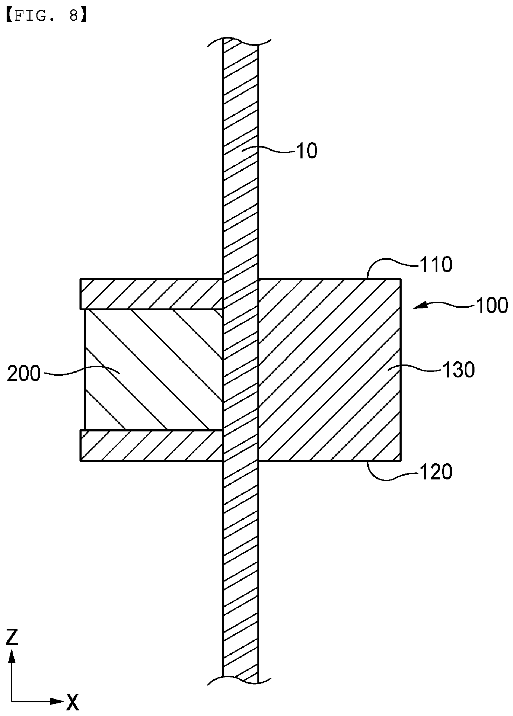

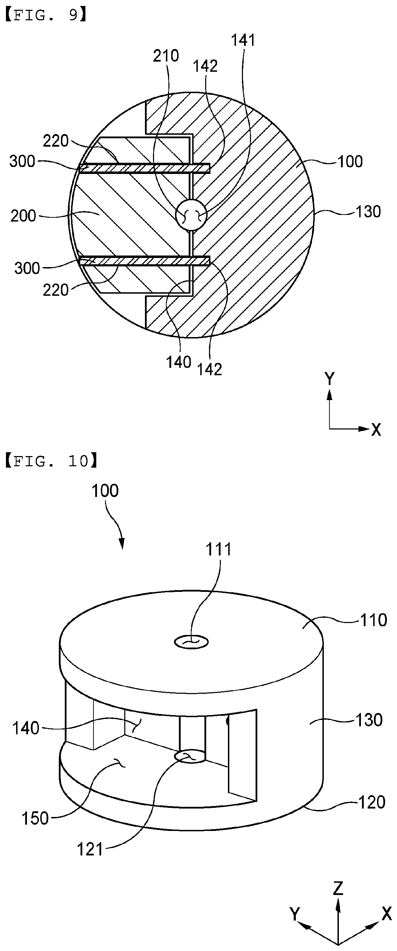

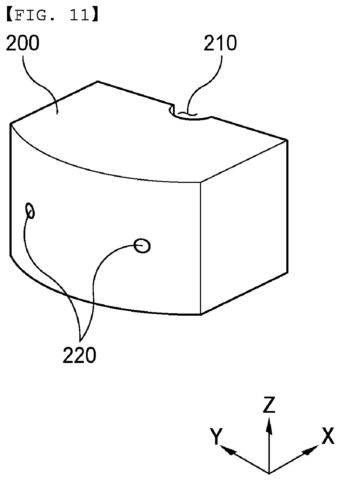

FIG. 7 is a perspective view illustrating the state in which a welding rod is fixed to a welding rod fixing apparatus according to a second embodiment of the present invention, FIG. 8 is a sectional view of the welding rod fixing apparatus shown in FIG. 7, taken along an XZ plane, and FIG. 9 is a sectional view of the welding rod fixing apparatus shown in FIG. 7, taken along an XY plane. FIG. 10 is a perspective view illustrating a body portion of the welding rod fixing apparatus according to the second embodiment of the present invention, and FIG. 11 is a perspective view illustrating a coupling portion of the welding rod fixing apparatus according to the second embodiment of the present invention.

Referring to FIGs. 7 to 11, the welding rod fixing apparatus according to the second embodiment of the present invention is identical to the welding rod fixing apparatus according to the first embodiment described above except for some configurations, and therefore the following description will be given based on different configurations.

A central part of a fourth surface 140 of a body portion 100 constituting the welding rod fixing apparatus according to the second embodiment may be flat, and a part of a side surface that forms a space portion 150 may be cut. Referring to FIG. 9, the fourth surface 140 may be configured to form a roughly rectangular shape with one side open.

In addition, one surface of a coupling portion 200 in contact with the central part of the fourth surface 140 may be configured as a flat surface corresponding to the shape of the central part of the fourth surface 140 so as to be engaged with the central part of the fourth surface 140.

In addition, the other surface of the coupling portion 200 may be outwardly convex. In other words, referring to FIGs. 7 and 11, the other surface of the coupling portion 200 may be configured as a curved surface having a curvature corresponding to a part of each of a first surface 110 and a second surface 120.

In addition, the coupling portion 200 may be inserted into the space portion 150, and the other surface of the coupling portion 200 may be located at or near the same distance perpendicular to edges of the first surface 110 and the second surface 120.

At this time, since the fronts of opposite sides of the fourth surface 140 correspond to the empty space portion 150, a part of each of opposite sides of the coupling portion 200 is exposed. Consequently, when the coupling portion 200 is coupled to the body portion 100 or detached from the body portion 100, the exposed opposite sides may serve as handles that can be gripped by an operator.

Next, a welding rod fixing method using the welding rod fixing apparatus according to the first embodiment of the present invention will be described with reference to FIGs. 2 to 6.

The welding rod fixing method according to the present invention includes (S1) inserting a welding rod 10 so as to simultaneously extend through the first hole 111 and the second hole 121, (S2) inserting the coupling portion 200 into the space portion 150, and (S3) inserting the fastening member 300 into the fastening recess 142 and the fastening hole 220 to fix the fastening member.

In step (S2), the coupling portion 200 may press a part of the welding rod 10 disposed in the first recess 141 through the second recess 210.

As described above, in the welding rod fixing apparatus according to the first embodiment of the present invention and the welding rod fixing method using the same, it is possible to fix the welding rod 10 by inserting the coupling portion 200 into the space portion 150 to pressing the welding rod 10 in the state in which the welding rod 10 has extended through the first hole 111 and the second hole 121.

Although the welding rod fixing apparatus according to the first embodiment has been described by way of example, the welding rod fixing apparatus according to the second embodiment may fix the welding rod in the same way.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Numerals)

10: Welding rod
100: Body portion
110: First surface 111: First hole
120: Second surface 121: Second hole
130: Third surface
140: Fourth surface
141: First recess 142: Fastening recess
150: Space portion
200: Coupling portion
210: Second recess 220: Fastening hole
300: Fastening member

## Claims

1. A welding rod fixing apparatus comprising:
a body portion comprising:
a first surface provided in a center thereof with a first hole through which a welding rod is configured to extend,
a second surface provided in a center thereof with a second hole through which the welding rod is configured to extend, the second hole located at a position corresponding to the first hole,
a third surface which connects the first surface and the second surface,
a space portion formed as a result of a part of an outer circumferential surface formed by the third surface being opened, the space portion being formed such that a hollow is formed from a part of the outer circumferential surface to a central part where the first hole and the second hole are connected to each other, and
a fourth surface configured to form the space portion; and
a coupling portion configured to be insertable into the space portion so as to press the welding rod when the welding rod extends through the first hole and the second hole.

2. The welding rod fixing apparatus according to claim 1, wherein the coupling portion, when inserted into the space portion, contacts the fourth surface and is configured to press the welding rod together with the fourth surface.

3. The welding rod fixing apparatus according to claim 2, wherein
the body portion is provided in the fourth surface thereof in contact with the coupling portion with a first recess corresponding to a shape of a part of the welding rod, and
the coupling portion includes one surface thereof in contact with the fourth surface with a second recess corresponding to the shape of a part of the welding rod.

4. The welding rod fixing apparatus according to claim 1, further comprising a fastening member coupled to the body portion after the coupling portion is inserted into the space portion.

5. The welding rod fixing apparatus according to claim 4, wherein
the fourth surface further comprises a fastening recess into which the fastening member is configured to be inserted, and
the coupling portion further comprises a fastening hole, into which the fastening member is configured to be inserted, the fastening hole located at a position corresponding to the fastening recess.

6. The welding rod fixing apparatus according to claim 5, wherein
the fastening member includes, on an outer surface thereof, a male thread, the fastening member being configured to simultaneously extend through the fastening recess and the fastening hole, and
each of the fastening recess and the fastening hole includes a female thread such that the fastening member, the fastening recess, and the fastening hole are configured to be threadedly coupled to each other.

7. The welding rod fixing apparatus according to claim 5, wherein
the fastening recess is formed toward the space portion, and the fastening recess includes a plurality of fastening recesses spaced apart from each other such that the first recess is disposed therebetween so as to avoid interference with the first recess, and
the fastening hole is formed through the one surface and the other surface of the coupling portion, and the fastening hole includes a plurality of fastening holes spaced apart from each other such tat the second recess is disposed therebetween so as to avoid interference with the second recess.

8. The welding rod fixing apparatus according to claim 2, wherein
a central part of the fourth surface is concave towards the third surface, and
the one surface of the coupling portion is configured as a curved surface corresponding to a shape of the central part of the fourth surface so as to be engaged with the central part of the fourth surface.

9. The welding rod fixing apparatus according to claim 8, wherein the other surface of the coupling portion is located inwardly of the space portion, and wherein the other surface is flat.

10. The welding rod fixing apparatus according to claim 2, wherein
a central part of the fourth surface is flat, and
the one surface of the coupling portion is configured as a flat surface corresponding to a shape of the central part of the fourth surface so as to be engaged with the central part of the fourth surface.

11. The welding rod fixing apparatus according to claim 10, wherein the other surface of the coupling portion is outwardly convex.

12. A welding rod fixing method using the welding rod fixing apparatus according to any one of claims 1 to 11, the method comprising:
(S1) inserting a welding rod (10) so as to simultaneously extend through the first hole and the second hole;
(S2) inserting the coupling portion into the space portion; and
(S3) inserting the fastening member into the fastening recess and the fastening hole to fix the fastening member.

13. The welding rod fixing apparatus according to claim 12, wherein, in step (S2), the coupling portion presses a part of the welding rod disposed in the first recess through the second recess.
